# EUROPÄISCHE PATENTSCHRIFT

(11) **EP 1 993 857 B1**
(45) Veröffentlichungstag und Bekanntmachung des Hinweises auf die Patenterteilung: **26.10.2016**
(21) Anmeldenummer: 07726579.1
(22) Anmeldetag: 02.03.2007
(51) Int. Cl.: B60C 23/04

(54) **REIFENMODUL MIT PIEZOELEKTRISCHEM WANDLER**
TYRE MODULE WITH PIEZOELECTRIC CONVERTER
MODULE DE PNEU À TRANSDUCTEUR PIÉZOÉLECTRIQUE

(30) Priorität: 02.03.2006 DE 102006009590; 02.03.2007 DE 102007010782; 02.03.2007 DE 102007010779
(43) Veröffentlichungstag der Anmeldung: 26.11.2008
(73) Patentinhaber: Continental Teves AG & Co. oHG, 60488 Frankfurt (DE)
(72) Erfinder: HEISE, Andreas, 64390 Erzhausen (DE); KAMMANN, Stefan, 65779 Kelkheim (DE)
(74) Vertreter: Bonn, Roman Klemens
(86) Internationale Anmeldenummer: PCT/EP2007/051977
(87) Internationale Veröffentlichungsnummer: WO 2007/099160

(56) Entgegenhaltungen:
- EP-A- 1 547 827
- WO-A-2004/030949
- WO-A-2007/000781
- DE-A1- 19 522 269

## Beschreibung

Die Erfindung betrifft ein Reifenmodul, welches an einer Innenseite eines Reifens, insbesondere eines Fahrzeugreifens, angebracht ist und ein Reifenüberwachungssystem.

Die Erfindung ist insbesondere dazu geeignet', Reifenzustandsgrößen mit einem energieautarken System zu ermitteln.

In modernen Kraftfahrzeugen werden vermehrt Reifenluftdruckerfassungsvorrichtungen verwendet, um Defekte oder Unfälle, welche auf einen zu niedrigen Reifenluftdruck zurückzuführen sind, zu vermeiden. Bei vielen dieser Systeme ist jeweils ein Reifenmodul an jedem Rad, insbesondere im Inneren des Reifens, angeordnet. Ein Reifenmodul umfasst oft mindestens einen Sensor zur Erfassung mindestens eines Reifenparameters, insbesondere des Reifendrucks, sowie eine Sendeeinheit und gegebenenfalls Auswerteelektronik. Die Energieversorgung der elektronischen Komponenten kann z. B. durch eine Batterie, einen Mikrogenerator mit piezoelektrischem Element oder eine Transponderspule erfolgen.

Aus der DE 44 02 136 A1 ist ein System zur Bestimmung der Betriebsparameter von Fahrzeugreifen bekannt, bei dem auf einem Trägerkörper eine Sensoreinheit, eine Auswerteelektronik und ein piezoelektrisches Element angeordnet ist, das die übrigen Systemkomponenten mit Energie versorgt. Das piezoelektrische Element weist einen mehrschichtigen Aufbau auf.

Die DE 10 2004 046 193 A1 beschreibt einen Drucksensor zur drahtlosen Druckmessung in einem Reifen sowie eine zugehörige Antenneneinrichtung zum Senden und Empfangen von elektromagnetischen Feldern.

Aus der DE 10 2006 003 825 A1 ist ein batterieloses Reifendruck-Überwachungssystem bekannt, das über einen Sensor Reifenparameter erfasst, wobei der Sensor eingangsseitig mit einer Antenne verbunden ist, um ein moduliertes Mikrowellensignal zu empfangen und über eine Steuerschaltung einen Teil des modulierten Mikrowellensignals in eine Versorgungsspannung umzuwandeln.

In der EP 1 614 552 A1 wird ein brückenförmiger Flicken mit einem elektromechanischen Wandler zur Verwendung in einem Fahrzeugreifen offenbart.

Die DE 10 2004 031 810 A1 benennt ein Reifenkontrollsystem, das über ein piezoelektrisches Element, das innerhalb des Reifens angeordnet ist, elektrische Energie erzeugt.

Aus der DE 43 29 591 C2 ist eine Vorrichtung zur Überwachung des Reifenluftdrucks bekannt, das über einen Sensor das Ausmaß der Verformung des Reifens beim Latschdurchlauf einen elektrischen Impuls erhält und eine Auswerteeinheit das Ausmaß der Verformung ermittelt.

Die DE 103 29 700 A1 beschreibt ein Verfahren, das aus der Reifenumdrehungsgeschwindigkeit sowie aus der Latschlänge und der Verformung über einen differenzierenden Sensor die Radlast und den Reifenluftdruck ermittelt.

In der DE 10 2004 001 250 B4 wird eine Vorrichtung offenbart, die aus der Verformung des Reifens beim Latschdurchlauf in Kurven über Sensoreinheiten die Seitenpositionen der Räder bestimmt.

Aus der WO 2004/030949 A1 sowie der WO 2007/000781 A1 ist jeweils eine Stromerzeugungseinheit zur Befestigung innerhalb eines Reifens bekannt, die ein piezoelektrisches Element aufweist.

Aus der DE 195 22 269 A1 ist eine Vorrichtung zum Ermitteln und Aufaddieren der Umdrehungen eines Reifens, insbesondere eines Kraftfahrzeugreifens, bekannt, die im Wesentlichen aus einem piezoelektrischen Element als Sensor für die Reifenumdrehung und einem damit in Wirkverbindung stehenden, mindestens eine Zähleinheit, eine Steuereinheit und eine Speichereinheit aufweisenden Schaltkreis besteht, wobei das piezoelektrische Element in Kraftaufnahmerichtung zwei sich gegenüberliegende Verlängerungen aufweist.

Bei der Verwendung eines Mikrogenerators zur Energieversorgung eines Reifenmoduls, welches im Reifeninneren angebracht ist, muss sichergestellt werden, dass der Mikrogenerator so gestaltet ist, dass er mindestens den Belastungen während der gesamten Lebensdauer des Reifens standhält. Dabei ist es von Vorteil, wenn der Mikrogenerator mit den übrigen Komponenten, wie z. B. den Bauteilen, ein kompaktes Modul bildet.

Ausgehend von diesem Stand der Technik liegt der Erfindung die Aufgabe zugrunde, ein Reifenmodul zur Anbringung im Inneren eines Reifens bereitzustellen, das genügend robust und zugleich leicht, kompakt, kostengünstig und einfach zu montieren ist.

Diese Aufgabe wird erfindungsgemäß durch ein Reifenmodul gemäß Anspruch 1 gelöst.

Die Erfindung betrifft auch die Verwendung des Reifenmoduls in einem Reifenüberwachungssystem gemäß Anspruch 14.

Vorteilhafte Ausgestaltungen der Erfindung sind Gegenstand der Unteransprüche.

Die Erfindung geht von der Überlegung aus, dass die hauptsächliche Belastung, die auf das Reifenmodul und seine piezoelektrischen Komponenten einwirkt, eine Biegung und/oder Verformung ist, verursacht durch die Verformung des Reifens beim Latschdurchlauf, besonders in den Knickstellen am Latschein- und austritt. Um die Lebensdauer des Reifenmoduls und seiner Komponenten zu erhöhen, sollte die einwirkende Kraft eine Biegung besonders des piezoelektrischen Bauteils nur bis zu einem vorgegebenen Grad verursachen, der unterhalb eines vorgegebenen kritischen Wertes für die Biegung liegt. Da die einwirkende Kraft nicht oder nicht zuverlässig durch einfache Maßnahmen begrenzt werden kann, ist ein geeignetes Auslenkungsbegrenzungsmittel für das piezoelektrischen Bauteil vorzusehen, das die Biegung begrenzt.

Um einen Biegung der elektronischen Bauelemente über einen vorgegebenen Wert, der die Belastbarkeit überschreitet könnte, zu vermeiden, sind diese vorteilhafterweise auf einem in Wesentlichen starren Bereich angeordnet.

Damit eine Befestigung des Reifenmoduls und seines elastischen Biegebereiches sowie der dem elastischen Biegebereich zugeordneten starren Bereiche am Innern des Reifens zuverlässig und dauerhaft vorgenommen werden kann, ist die Verwendung von geeigneten Befestigungsmitteln und einer Anzahl von Dämpfungsmitteln vorgesehen.

Um die Belastungen, die durch die Verformungen des Reifens beim Latschdurchlauf auf das Reifenmodul einwirken, hauptsächlich über die vorgesehenen Dämpfungsmittel aufzufangen, ist deren Federkonstante größer als die des zu schützenden elastischen Biegebereiches.

Damit die bei der Verformung des Reifens beim Latschdurchlauf entstehende Einwirkung auf das Reifenmodul möglichst effektiv zur Energieerzeugung, also zur Umwandlung von mechanischer in elektrische Energie genutzt werden kann, ist das Reifenmodul vorteilhafterweise derart angeordnet, dass die größtmögliche Kraft auf den elastischen Biegebereich einwirken kann.

Um ein Auslenkungsbegrenzungsmittel als möglichst wirksamen Schutz für den elastischen Biegerbereich vorzusehen, ist dieses als ein Gehäuse ausgebildet, das aus einer Anzahl von Gehäuseteilen besteht.

Um den elastischen Biegebereich wirksam zu schützen, ist das Auslenkungsbegrenzungsmittel zweckmäßigerweise in diesem Bereich angeordnet.

Um das Gehäuse vor zu starken Belastungen, wie sie durch die Verformung des Reifens beim Latschdurchlauf auftreten können, zu schützen, ist dieses in seinen Endbereichen mit einem Dämpfungsmittel verbunden.

Um die Auslenkung des elastischen Biegebereiches wirksam zu begrenzen, ist die Biegung der Gehäuseteile gegeneinander vorteilhafterweise durch einen harten oder elastischen Gehäuseanschlag begrenzt.

Damit das piezoelektrische Material im elastischen Biegebereich angeordnet werden kann und eine vorgegebene Biegung nicht überschritten wird, ist der elastische Biegebereich vorteilhafterweise als eine geeignete Trägerschicht, insbesondere als Blattfeder, ausgebildet.

Um eine möglichst hohe Energieausbeute durch die Umwandlung von mechanischer in elektrische Energie sowie eine lange Lebensdauer des piezoelektrischen Materials zu erzielen, ist dieses vorteilhafterweise als eine piezoelektrische Keramik, insbesondere Bleizirkonattitanat, oder als eine piezoelektrische Folie, insbesondere aus Polyvinylidenfluorid (PVDF), ausgebildet.

Um den Gehäuseanschlag besonders wirksam als Auslenkungsbegrenzungsmittel zu nutzen, ist der elastische Biegebereich und die ihm zugeordneten starren Bereiche vorteilhafterweise an einer Anzahl von Stellen, mindestens aber an zwei, im Gehäuse befestigt.

Damit die Versorgung des Reifenmoduls mit elektrischer Energie über einen möglichst langen Zeitraum sichergestellt ist, umfasst das Reifenmodul zweckmäßigerweise ein zweites Mittel zur Energieversorgung bzw. Energiespeicherung.

Um einen eindeutige Zuordnung des Reifenmoduls und seiner Informationen zu einem Reifen und/oder Rad des Kraftfahrzeuges auch über einen drahtlose Übermittlungsweg zu ermöglichen, ist dieses vorteilhafterweise mit einem Mittel zur Funkerkennung über eine geeignete Transpondertechnologie, beispielsweise RFID, ausgestattet.

Um die vom Reifenmodul ermittelten Informationen für weitere Verwendungen und einen zeitunabhängigen Abruf zu speichern, ist das Reifenmodul vorteilhafterweise mit einem Datenspeicher ausgestattet.

Damit die vom Reifenmodul ermittelten Informationen auf einem drahtlosen Weg zu einer zentralen Auswerteeinheit übermittelt werden können, umfasst der Datenspeicher zweckmäßigerweise eine geeignete Sende- und Empfangseinheit.

Um die Latschlänge eines Reifens zuverlässig ermitteln und dieser eine Kenngröße zuordnen zu können, wird vorteilhafterweise die Zeit zwischen den beim Latscheintritt und beim Latschaustritt durch die Verformung des Reifens und die dadurch in der Piezoelektrik erzeugte Spannungsspitze gemessen und in Relation zur Umlaufgeschwindigkeit des Reifens ausgewertet.

Damit die vom Reifenmodul ermittelten Informationen zuverlässig ausgewertet und zur Beurteilung von Fahr- und Systemzuständen herangezogen werden können, ist das Reifenmodul vorteilhafterweise in ein Reifenüberwachungssystem mit einer zentralen Auswerteeinheit über geeignete Übermittlungswege verbunden.

Die mit der Erfindung erzielten Vorteile liegen insbesondere darin, dass das Reifenmodul eine Lebensdauer erreicht, die der des Reifens entspricht, und daher während seiner Einsatzzeit nicht ausgetauscht werden muss.

Ausführungsbeispiele der Erfindung werden anhand einer Zeichnung näher erläutert. Darin zeigen:
- Fig. 1: das Abrollverhalten eines Reifens in schematischer Ansicht,
- Fig. 2: ein Reifenmodul in schematischer Darstellung,
- Fig. 3: ein Biegeelement in einem Gehäuse,
- Fig. 4: das vorgenannte Gehäuse ohne das Biegeelement,
- Fig. 5: ein Gehäuse in einer anderen Ausführungsform;
- Fig. 6: das vorgenannte Gehäuse mit einem verbindenden Element,
- Fig. 7: eine einteilige biegeelastische Trägerschicht, und
- Fig. 8: eine zweiteilige biegeelastische Trägerschicht.

Gleiche Teile sind in allen Figuren mit denselben Bezugszeichen versehen.

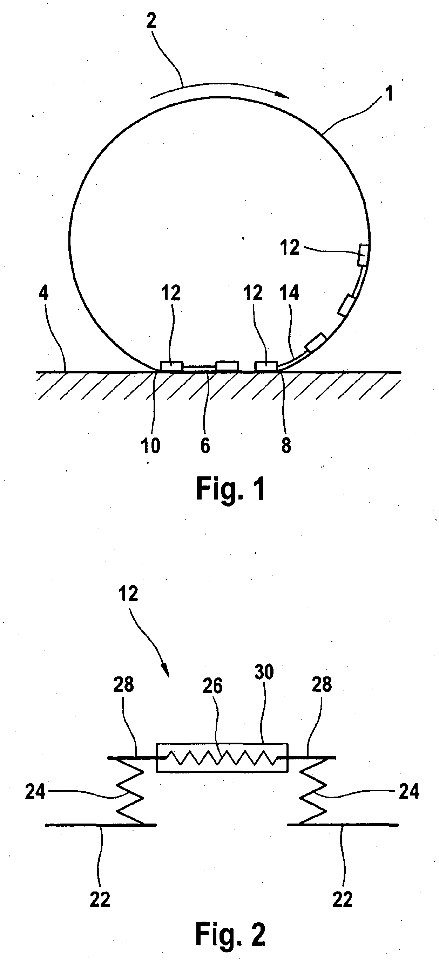

Die Fig. 1 zeigt das Abrollverhalten eines Reifens 1 mit einer Rotationsrichtung 2 eines Kraftfahrzeugs, wobei dieses Verhalten auch auf beispielsweise ein Motorrad oder einen Motorroller, auf ein Nutzfahrzeug, ein Fahrrad oder Flugzeug übertragen werden kann. Das Abrollverhalten ist hier in idealisierter Form auf einem ebenen Untergrund 4 dargestellt. Es entsteht immer eine abgeplattete Aufstandsfläche, der so genannte Latsch 6. Die Größe, also die Länge und Breite, wobei die Länge vom Latscheintritt 8 bis zum Latschaustritt 10 gemessen wird, sowie die Form des Latschs 6 ist u. a. abhängig von Reifenkenndaten, der Radlast, dem Reifendruck, dem Fahrzustand (Längs- und Querkräfte) und der Geschwindigkeit.

Die Verformung des Reifens 1 bei Latschdurchlauf, speziell der Knick 14 beim Latscheintritt 8 und Latschaustritt 10, kann mit einem piezoelektrischen Element zur Energiegewinnung genutzt werden. Dabei ist darauf zu achten, dass das Reifenmodul 12, welches das piezoelektrische Element umfasst, durch ein spezielles Gehäuse geschützt ist oder von sich aus eine genügende Widerstandsfähigkeit aufweist.

Das Reifenmodul 12 ist derartig im Reifen befestigt, dass das piezoelektrische Element durch die Walkbewegungen ausgelenkt wird und damit mechanische in elektrische Energie umwandelt. Da eine Piezokeramik typischerweise brüchig und spröde ist, muss die Auslenkung zum Schutz des Elements durch ein geeignetes Gehäuse begrenzt werden. Alle bisherigen Lösungsansätze beachten dieses Problem nicht.

Die Fig. 2 zeigt ein beispielsgemäßes Reifenmodul 12, bei welchem die einzelnen Komponenten, ähnlich einem Ersatzschaltbild, schematisch dargestellt sind. Das Modul ist an mindestens zwei Stellen über geeignete Befestigungsmittel 22, beispielsweise über Befestigungsfüße oder Teile von flexiblen Verbindungen, die aus einem gummiartigen Material bestehen können, am Inneren des Reifens 1 befestigt'. Das Reifenmodul 12 umfasst zwei Dämpfungsbereiche 24, welche üblicherweise Gehäusebeinen oder flexiblen Verbindungen entsprechen sowie einen Bereich 26, welcher dem Biegeelement, beispielsweise einer Blattfeder, welche aus piezoelektrischem Material besteht und/oder mit piezoelastischem Material beschichtet ist, entspricht. Des Weiteren umfasst das Reifenmodul 12 mindestens eine Anzahl von Bereichen 28, die einer Verlängerung des Biegeelementes 26 darstellen. Die Bereiche 24 sowie 26 sind elastisch ausgeführt, wobei die Federkonstante der Bereiche 24 größer ist als die des Bereiches 26; das bedeutet, dass die Dämpfung im Bereich 24 härter als im Bereich 26 ausgeführt ist.

Die Bereiche 28, also die Verlängerungen 28 des Biegeelementes 26, sind im Wesentlichen starr ausgeführt. Das Reifenmodul 12 umfasst weiterhin eine Auslenkungsbegrenzung 30, beispielsweise einen Anschlag, für die Biegung des Biegeelementes 26.

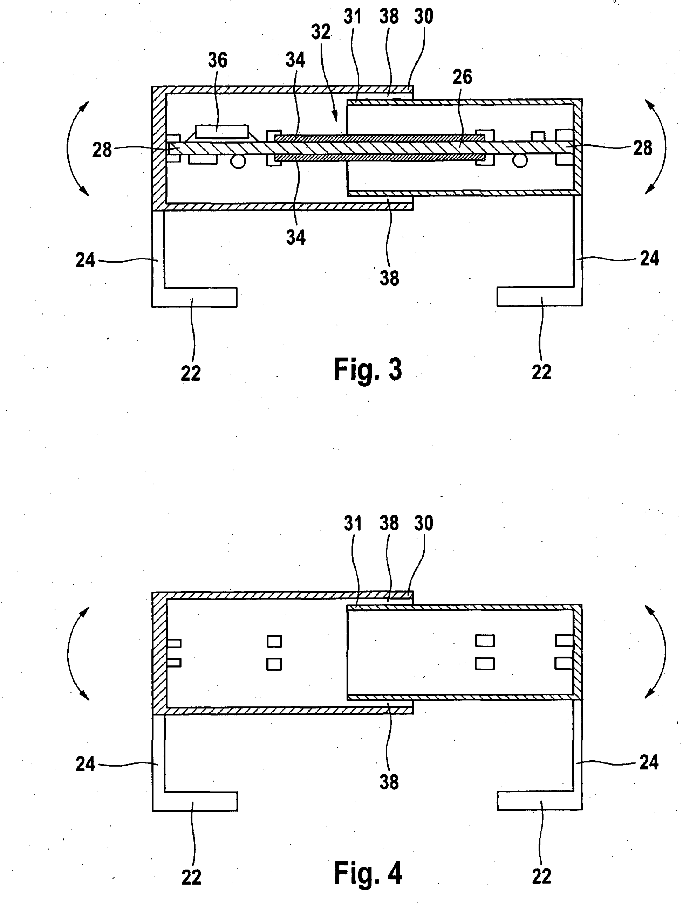

In der Fig. 3 ist eine denkbare Ausführungsform des Reifenmoduls dargestellt. Die elastischen Gehäusebereiche 24, die hier als flexible Gehäusebeine ausgeführt sind, halten vergleichbar einer Feder übermäßige Verformungen von den Bereichen des Biegelementes 26 und der zugeordneten Verlängerungen 28 fern. Bei Latschdurchlauf kommt es zu einer Biegung des Biegelementes 26 und somit des piezoelektrischen Wandlerbereichs 32. Dieser kann als piezoelektrisches Biegeelement 26 oder als vergleichbare biegeelastische Trägerschicht mit aufgebrachtem piezoelektrischem Material 34 ausgebildet sein.

Auf den zwei im Wesentlichen starren Verlängerungen 28 des Biegelementes 26 sind die elektronischen Bauteile 36 aufgebracht. Die elektronischen Bauteile 36 umfassen üblicherweise Sensoren, insbesondere eine Anzahl von Drucksensoren, Auswerteelektronik, Sende- und/oder Empfangseinrichtungen zum Austausch von Steuer- und Datensignalen, Speicher, eine zweite Energiequelle und andere Komponenten.

Zur Begrenzung der mechanischen Auslenkung des piezoelektrischen Wandlerbereichs 32 respektive des Biegelementes 26 umfasst das Gehäuse des Reifenmoduls 12 neben den elastischen Gehäusebereichen 24 auch eine jeweils einer Gehäuseeinheit 30 und 31 zugeordnete Auslenkungsbegrenzung, welche beispielsweise als Gehäuseanschlag ausgeführt ist. In dieser Darstellung ist die Auslenkungsbegrenzung durch zwei ineinander gefügte Gehäuseteile 30 und 31 realisiert, wobei der Durchmesser des Gehäuseteils 31 kleiner als der des Gehäuseteils 30 ist. Bei übermäßiger Biegung in die durch die Pfeile angegebene Richtung kommt es zu einem Gehäuseanschlag zwischen den Gehäuseteilen 30 und 31 in den beidseitigen Bereichen 38, welcher eine weitere Biegung verhindert und somit den piezoelektrischen Wandlerbereich 32 respektive das Biegelement 26 mit dem piezokeramischem Material 34 vor Zerstörung schützt. Der Schaltungsträger 26 wirkt hier im piezoelektrischen Wandlerbereich 32 wie ein Scharnier.

Die Fig. 4 zeigt das Gehäusebeispiel aus der Fig. 3, jedoch ohne den als Biegeelement 26 ausgebildeten Schaltungsträger mit piezoelektrischem Material 34 und den elektronischen Bauteilen 36.

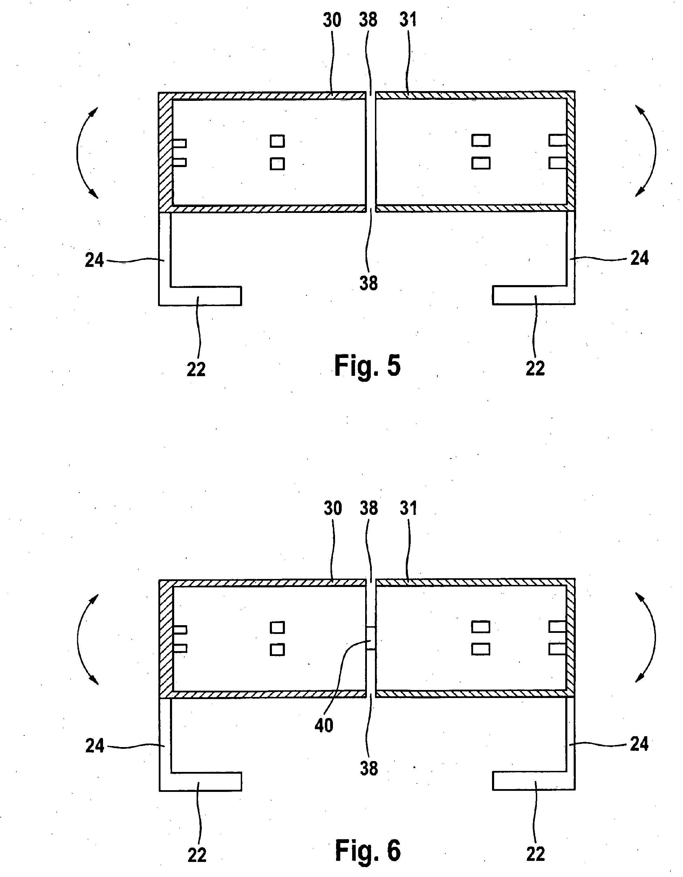

Die Fig. 5 zeigt ein weiteres Beispiel für die denkbare Auslegung eines Gehäuses. Im Gegensatz den Darstellungen in Fig. 3 und zu Fig. 4 ist die zum Schutz der piezoelektrischen Materials 34 notwendigen Auslenkungsbegrenzung dadurch realisiert, dass die beiden Gehäuseteile 30 und 31 den gleichen Durchmesser besitzen und in einem vorgegebenen Abstand voneinander angeordnet sind. Bei übermäßiger Biegung in die durch die Pfeile angegebene Richtung kommt es zu einem Gehäuseanschlag zwischen den Gehäuseteilen 30 und 31 an den Anschlagpunkten 38, welcher eine weitere Biegung der Trägerschicht 26 im piezoelektrischem Material 34 verhindert.

Die Fig. 6 zeigt ein weiteres Gehäusebeispiel ähnlich zu dem in der Fig. 5 gezeigten. Hier wird die Scharnierfunktion des Gehäuses zusätzlich durch den flexibel ausgestalteten Gehäusebereich 40, welcher einen weiteren Anschlag zusätzlich zu den Anschlagpunkten 38 zwischen den Gehäuseteilen 30 und 31 bei der Durchbiegung darstellt, unterstützt. Analog zu der in der Fig. 3 dargestellten Ausführungsform verläuft das piezoelektrische Biegeelement 26, ausgebildet als biegeelastische Trägerschicht mit dem aufgebrachten piezoelektrischen Material 34 und somit der piezoelektrische Wandlerbereich 32 durch den flexiblen Gehäusebereich 40. Die Verbindung zwischen den beiden Gehäuseteilen 30 und 31 wirkt einerseits als Scharnier und kann andererseits Längskräfte aufnehmen. Somit ist ein weiterer Schutz des piezoelektrischen Materials 34 vor Zerstörung realisiert. Um eine möglichst gute Krafteinwirkung in das piezoelektrischen Material 34 zu gewährleisten, sollte der flexible Gehäusebereich oder Steg 40 möglichst nahe an der Trägerschicht 26 liegen.

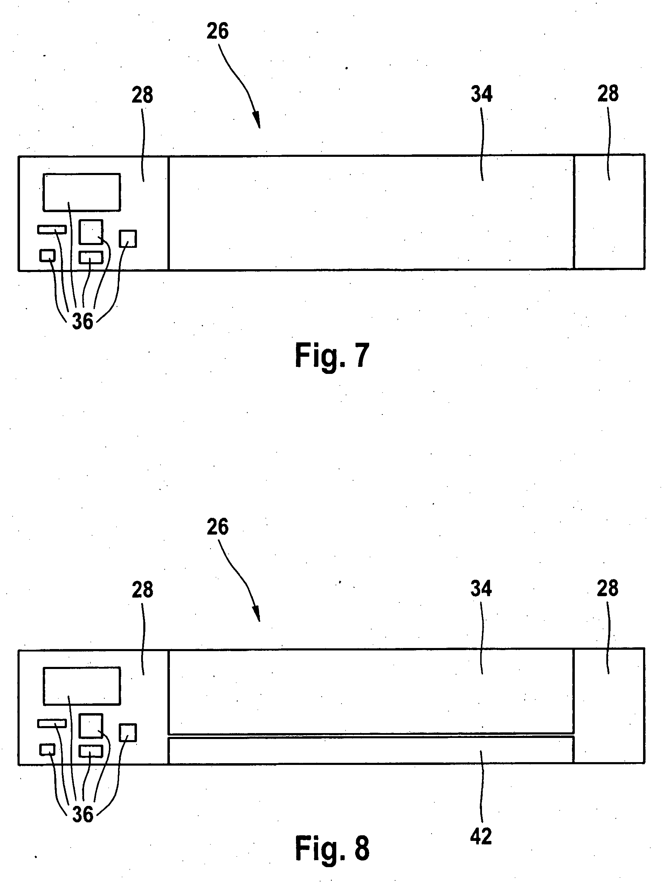

Die Fig. 7 und 8 zeigen zwei Ausführungsformen einer beispielgemäßen biegeelastischen Trägerschicht 26 zur Einbringung in die in den Figuren 3 bis 6 gezeigten Gehäuse, die aus den jeweiligen Gehäuseteilen 30 und 31 bestehen. Diese Trägerschicht 26 ist hier direkt als Schaltungsträger, beispielsweise als eine Leiterplatte, ausgebildet. Die elektronischen Bauelemente 36 sind in einem starren Bereich 28, also einer Verlängerung des Biegeelementes 26, des Schaltungsträgers angeordnet. Dieser dient auch als Grundlage für die elektronische Schaltung. Optional kann auch der zweite starre Bereich 28 hierfür verwendet werden.

Die Bereiche 28 entsprechen den Haltebereichen zur Befestigung des Schaltungsträgers 26 in einem der Gehäuseteile 30 oder 31. Im mittleren Bereich des Schaltungsträgers 26 ist der piezoelektrische Wandlerbereich 32 angeordnet. Hier ist beispielsgemäß das piezoelektrische Material 34 ein- oder beidseitig angeordnet.

In der Fig. 8 ist der Bereich mit piezoelektrischem Material 34 in zwei getrennte Gebiete 34 und 42 aufgeteilt. So kann beispielsweise der kleinere Bereich 42 als Sensor dienen, typischerweise zur Messung des Latschs, während der größere Bereich der piezoelektrischen Fläche 34 zur Energiegewinnung in einer Ausführung als Mikrogenerator verwendet werden kann.

Ein Reifenmodul 12 der genannten Bauart kann neben dem genannten Mikrogenerator noch eine zweite Energiequelle nutzen, um auch im Stand eine Funktionsfähigkeit zu erhalten oder Daten speichern zu können. Diese Energiequelle kann beispielsweise als eine Batterie oder eine Low-Frequency-Quelle, üblicherweise aus einem Frequenzbereich um 125 kHz, ausgebildet sein. Hierdurch ergibt sich die Möglichkeit, das Reifenmodul 12 sowohl während der Fahrt als auch im Stand, wie es u. a. während der Produktion vorkommt, mit Energie zu versorgen. Bei der Fahrt erfolgt die Energieversorgung mit Hilfe des genannten Mikrogenerators, im Stand kann die Energieversorgung über ein Low-Frequency-Feld erfolgen. Das LF-Feld kann neben der Energieversorgung auch Daten an das Reifenmodul übertragen.

Auch eine Kombination mit RFID (Radio Frequency Identifier) ist möglich. Hierbei wird die bekannte RFID-Technik in Kombination mit dem Reifenmodul 12 angewendet. Mit RFID können Daten aus einem Speicher gelesen und/oder in einen Speicher geschrieben werden. Dieser Speicher ist identisch mit dem Datenspeicher, den das Reifenmodul 12 im Fahrbetrieb, beispielsweise im Mikrogenerator-Betrieb, verwendet. Über RFID können so Daten in den Reifen geschrieben und aus dem Reifen gelesen werden. Diese Datenübertragung kann sowohl während der Reifen- bzw. Fahrzeugproduktion als auch im Betrieb, zur Logistik oder zur Diagnose im Service verwendet werden. Sowohl RFID als auch die das Modul steuernde Einheit verwenden dabei denselben Speicher. Ein Vorteil ist hierbei, dass die RFID-Technik keine externe Spannungsversorgung benötigt. Dies prädestiniert diese Technik zur Kombination mit einem Mikrogenerator-gespeisten Reifenmodul 12, welches nur während des Fahrbetriebes funktioniert.

Der das Reifenmodul 12 vollständig oder teilweise mit Spannung versorgende Mikrogenerator kann auch zur Erkennung der Latschlänge, also der Strecke zwischen dem Latscheintritt 8 und dem Latschaustritt 10, und/oder des Verhältnisses zwischen der Zeit des Latschdurchlaufs und der Gesamtumlaufzeit des Reifens 1 verwendet werden, wobei der Mikrogenerator als Signalgeber für die Latscherkennung verwendet wird.. Der Mikrogenerator, der dabei auch als Sensor dient, kann dabei radiale oder tangentiale Beschleunigungsänderungen, eine Verformung des Reifens 1 oder eine Kombination aus beidem ausnutzen. Bevorzugt ist ein Mikrogenerator, welcher auf einem piezoelektrischen Wandler basiert, wie oben beschrieben.

Eine Möglichkeit ist es, die Verformung oder Dehnung des Innerliners des Reifens 1, speziell den Knick 14 beim Latsch-eintritt 8 oder Latschaustritt 10, zu messen und daraus die Zeit des Latschdurchlaufs 6 und die Umdrehungszeit des Reifens 1 zu bestimmen. Dies kann ebenfalls mit Hilfe eines piezoelektrischen Materials 34, welches an einem Bereich im Reifen 1 angeordnet ist, der beim Latschdurchlauf 6-verformt wird, erfolgen. Da beim Latscheintritt 8 und Latschaustritt 10 der Reifen 1 verformt wird, erfolgt eine Ladungstrennung im piezoelektrischen Material 34, welche als elektrische Spannung abgegriffen werden kann. Es können die Zeiten zwischen diesen Spannungsspitzen ermittelt werden. Aus den zeitlichen Abständen ergeben sich die Latschzeit und die Umlaufzeit des Reifens 1.

Die oben beschriebene Informationen und Daten, beispielsweise Latschzeit und Gesamtumlaufzeit, werden dann als Bestandteil des Übertragungsprotokolls von dem Reifenmodul 12 an die Fahrzeugelektronik, z. B. eine Zentraleinheit eines Reifenüberwachungssystems im Kraftfahrzeug, gesendet. Die Verarbeitung der Daten kann dabei sowohl im Reifenmodul 12 als auch in der Fahrzeugelektronik erfolgen.

Das Reifenmodul 12 ermittelt einen Indikator für die Latschlänge bzw. das Verhältnis von Latschlänge zu Gesamtumfang eines Reifens. Hierbei kann beispielsweise ein Quotient aus Latschzeit und Umlaufzeit gemessen werden. Der Indikator kann vom Reifenmodul 12 an eine Auswerteeinheit übertragen werden.

Das ermittelte Verhältnis von Latschzeit zu Umlaufzeit kann für eine oder mehrere der folgenden Systemaufgaben verwendet werden, gegebenenfalls kann die Information bezüglich der Latschzeit/Latschlänge durch eine Information über den Reifendruck, welcher üblicherweise mit einem insbesondere in das Reifenmodul 12 integrierten Drucksensor bestimmt wird, ergänzt oder kombiniert werden:
1. Zuordnung der Reifenmodule zu den einzelnen Positionen (Autolocation) durch "dynamische Achslastverteilung". Es treten der Fahrdynamik entsprechende Radlasten auf und dementsprechend auch - je nach Fahrsituation - unterschiedliche Latschlängen. Bei einer Rechtskurve z. B. entsteht eine dynamische Belastung der linken (kurvenäußeren) Räder. Der Latsch auf der linken Seite wird also länger und der Latsch auf der rechten Seite kürzer. Bei z. B. einer Bremsung vergrößert sich der Latsch vorne. So treten also bei Kurvenfahrt bzw. bei Beschleunigungen oder Bremsungen unterschiedliche Latschlängen auf, diese können detektiert und genutzt werden.
2. Beladungsabhängige Druckwarnung wird möglich (durch mehr Gewicht wird die Latschlänge größer, das bedeutet, dass mehr Druck im Reifen notwendig ist). Reifenhersteller empfehlen, je nach Beladung unterschiedliche Luftdrücke einzustellen. Meist erfolgt die Unterteilung bisher in zwei oder drei Stufen (leer, teilbeladen, vollbeladen). Hier kann man ein intelligentes Modell anwenden, welches z. B. zusätzlich die Fahrstrecke bzw. die Fahrzeuggeschwindigkeit berücksichtigt (Druckwarnung bei hoher Beladung und dafür nicht ausreichendem Luftdruck erfolgt z. B. erst nach bestimmter Wegstrecke oder ab einer bestimmten Geschwindigkeit).
3. Wankbewegungen können erkannt und durch Kommunikation mit dem ESP Steuergerät unterbunden werden. Wenn ein Fahrzeug wankt, dann ändern sich die dynamischen Radlasten. Dies kann durch eine Latschlängenmessung erkannt und für andere Systeme genutzt werden.
4. Die einzelnen Radlasten können erkannt werden und durch andere Systeme des Fahrzeugs genutzt werden. Sind die Eigenschaften eines Reifens bekannt, kann man prinzipiell mit Hilfe der Latschlänge und des Reifendrucks die Radlast bestimmen. Die Radlasten können z. B. für die Optimierung des Bremssystems (EBV - Elektronische Bremsverteilung) genutzt werden. Weiterhin lassen sich die Feder-Dämpfer-Wirkungen moderner Fahrwerke einstellen. Bei bekannten Radlasten kann das Fahrwerk den Gegebenheiten angepasst werden, was für den Fahrer mehr Komfort und Sicherheit bedeutet. Ebenso kann die Lenkung auf die einzelnen Radlasten (bzw. den Beladungszustand des Fahrzeugs) reagieren. So können Komfort und Handling bei beladenen Fahrzeugen verbessert werden.
5. Unebene Untergründe können erkannt werden und durch andere Systeme des Fahrzeugs genutzt werden (z. B. Fahrwerke oder Bremsen).
6. Früherkennung von Aquaplaning (oder Fahrt auf Schneematsch etc.) wird möglich (Aufschwimmen eines Rades wird erkannt). Fahrzeugsysteme können darauf reagieren und eine Steuerung/Regelung vornehmen.
7. Radlasterkennung ist möglich, da die Latschlänge direkt mit der Radlast zusammenhängt. Die Radlasterkennung kann z. B. zu einer automatischen Leuchtweitenregulierung genutzt werden, wodurch bisher dafür notwendige Sensoren dann entfallen können.
8. Nutzung des Latschlängensignals für eine Überschlagsfrüherkennung und Vermeidung (Roll-Over-Protection), da ein drohendes Abheben eines oder mehrere Räder erkannt wird.
9. Erkennung des Abhebens (oder bevorstehenden Anhebens) eines Fahrzeugrades von der Fahrbahn.
10. Redundanz des Luftdrucksensors. Bisher lässt sich die Plausibilität des Druckwertes nicht nachvollziehen. Wenn als zweite Information noch die Latschlänge zur Verfügung steht, kann ein "hängender" Drucksensor oder ein Drucksensor, der einen ganz falschen Wert ermittelt, erkannt werden.

### Bezugszeichenliste

- 1: Reifen
- 2: Rotationsrichtung
- 4: Untergrund
- 6: Latsch
- 8: Latscheintritt
- 10: Latschaustritt
- 12: Reifenmodul
- 14: Knick
- 15: piezoelektrische Keramik
- 24: Dämpfungs- / Gehäusebereich / elastische Dämpfungsmittel
- 26: Biegeelement / Trägerschicht / elastische Biegebereiche
- 28: Verlängerungen / starrer Bereich
- 30: Auslenkungsbegrenzungsmittel / Gehäuseteil / Gehäuseanschlag
- 30, 31: Gehäuseteile
- 32: piezoelektrischer Wandler
- 34: piezoelektrisches Material
- 36: elektrische Bauteile
- 38: Anschlagpunkte
- 40: Gehäusebereich / Steg
- 42: Bereich / Gebiet

## Patentansprüche

1. Reifenmodul (12) mit einem piezoelektrischen Wandler (32) zur Anbringung an einer Innenseite eines Reifens (1), insbesondere eines Fahrzeugreifens,
wobei
der piezoelektrische Wandler (32) eine Anzahl von mit piezoelektrischem Material (34) gebildeten elastischen Biegebereichen (26) und
ein Auslenkungsbegrenzungsmittel (30) umfasst, das den elastischen Biegebereich (26) vor übermäßiger Biegung schützt, wobei die Befestigung des elastischen Biegebereichs (26) und einer Anzahl von zugeordneten starren Bereichen (28) am Inneren des Reifens (1) mit geeigneten Befestigungsmitteln (22) über eine Mehrzahl von elastischen Dämpfungsmitteln (24) vorgesehen ist, wobei das Auslenkungsbegrenzungsmittel (30) als Gehäuse aus einer Anzahl von Gehäuseteilen (30, 31) ausgebildet ist, wobei das Gehäuse zweiteilig ausgeführt ist und den elastischen Biegebereich (26) sowie eine Anzahl von starren Bereichen (28) umschließt, wobei jedes der beiden Gehäuseteile (30, 31) in einem Endbereich mit einem elastischen Dämpfungsmittel (24) verbunden ist, wobei die Auslenkung des elastischen Biegebereichs (26) durch einen Gehäuseanschlag (30) zwischen den Gehäuseteilen (30, 31) begrenzt ist.

2. Reifenmodul (12) nach Anspruch 1,
**dadurch gekennzeichnet, dass**
der elastische Biegebereich (26) mit mindestens einem im Wesentlichen starren Bereich (28) verbunden ist, auf welchem elektronische Bauelemente (36) angeordnet sind.

3. Reifenmodul (12) nach Anspruch 1 oder 2,
**dadurch gekennzeichnet, dass**
die Federkonstanten der elastischen Dämpfungsmittel (24) größer sind als die Federkonstante des elastischen Biegebereichs (26).

4. Reifenmodul (12) nach einem der Ansprüche 1 bis 3,
**dadurch gekennzeichnet, dass**
dieses im Reifen (1) derart angeordnet ist, dass die durch die Verformung des Reifens (1) bei Latschdurchlauf auf den elastischen Biegebereich (26) des Reifenmoduls (12) übertragene Kraft zur Energieumwandlung vorgesehen ist.

5. Reifenmodul (12) nach einem der Ansprüche 1 bis 4,
**dadurch gekennzeichnet, dass**
das Auslenkungsbegrenzungsmittel (30) im Bereich des elastischen Biegebereichs (26) angeordnet ist.

6. Reifenmodul (12) nach einem der Ansprüche 1 bis 5,
**dadurch gekennzeichnet, dass**
der elastische Biegebereich (26) als eine, insbesondere als Blattfeder ausgebildete, Trägerschicht ausgebildet ist, auf welcher piezoelektrisches Material (34) jeweils in eine Anzahl von Lagen ein- oder zweiseitig aufgebracht ist.

7. Reifenmodul (12) nach einem der Ansprüche 1 bis 6,
**dadurch gekennzeichnet, dass**
das piezoelektrische Material (34) als eine piezoelektrische Keramik (15), insbesondere Bleizirkonattitanat (PZT), oder als eine piezoelektrische Folie, insbesondere aus Polyvinylidenfluorid (PVDF), ausgebildet ist.

8. Reifenmodul (12) nach einem der Ansprüche 1 bis 7,
**dadurch gekennzeichnet, dass**
der elastische Biegebereich (26) mit mindestens einem der zugeordneten starren Bereiche (28) eine Fläche bildet, welche im Bereich ihrer Enden an mindesten zwei Stellen im Gehäuse befestigt ist.

9. Reifenmodul (12) nach einem der Ansprüche 1 bis 8,
**dadurch gekennzeichnet, dass**
das Reifenmodul (12) neben dem piezoelektrischen Wandler (32) ein zweites Mittel zur Energieversorgung umfasst, insbesondere in Form einer Batterie und/oder durch Transpondertechnologie über ein elektromagnetisches Feld.

10. Reifenmodul (12) nach einem der Ansprüche 1 bis 9,
**dadurch gekennzeichnet, dass**
dieses mit einem Mittel zur Funkerkennung (RFID) augestattet ist.

11. Reifenmodul (12) nach einem der Ansprüche 1 bis 10, **dadurch gekennzeichnet, dass**
dieses einen Datenspeicher umfasst.

12. Reifenmodul (12) nach Anspruch 11,
**dadurch gekennzeichnet, dass**
der Datenspeicher eine Sende- und Empfangseinheit zur drahtlosen Datenübermittlung umfasst.

13. Reifenmodul (12) nach einem der Ansprüche 1 bis 12,
**dadurch gekennzeichnet, dass**
dieses eine Kenngröße, welche ein Maß für die Latschlänge des dem Reifenmoduls (12) zugeordneten Reifens (1) ist, bestimmt.

14. Reifenüberwachungssystem mit einem Reifenmodul (12) nach einem der Ansprüche 1 bis 13,
**gekennzeichnet durch** eine Zentraleinheit und eine Anzahl von Reifenmodulen (12), die mit einer zentralen Auswerteeinheit über Steuerleitungen oder mittels einer drahtlosen Übertragungstechnik in Verbindung stehen.

15. Reifenüberwachungssystem nach Anspruch 14,
**dadurch gekennzeichnet, dass**
die zentrale Auswerteeinheit zur Nutzung der übermittelten bestimmten Kenngröße für mindestens eines der folgenden Verfahren ausgelegt ist:
- Ermittlung der Positionen der einzelnen Räder, insbesondere bei Kurvenfahrt, Bremsung oder Beschleunigung,
- Beladungsabhängige Reifendruckwarnung, Wankausgleich, insbesondere über ein Elektronisches-Stabilitäts-Programm (ESP),
- Erkennung der Radlast und Verwendung dieser Information in anderen Fahrzeugsteuersystemen, insbesondere im System zur Leuchtweitenregulierung,
- Radabhebe- und Überschlagsfrüherkennung.

## Claims

1. Tyre module (12) with a piezoelectric transducer (32) for attachment to an inner side of a tyre (1), in particular of a vehicle tyre,
wherein
the piezo electric transducer (32) comprises a number of elastic bending regions (26) which are formed with piezoelectric material (34), and
a deflection-limiting means (30) which protects the elastic bending region (26) against excessive bending, wherein the attachment of the elastic bending region (26) and a number of assigned rigid regions (28) to the interior of the tyre (1) is provided using suitable attachment means (22) via a multiplicity of elastic damping means (24), wherein the deflection-limiting means (30) is embodied as a housing composed of a number of housing parts (30, 31), wherein the housing is embodied in two parts and encloses the elastic bending region (26) and a number of rigid regions (28), wherein each of the two housing parts (30, 31) is connected in an end region to an elastic damping means (24), wherein the deflection of the elastic bending region (26) is limited by a housing stop (30) between the housing parts (30, 31).

2. Tyre module (12) according to Claim 1,
**characterized in that**
the elastic bending region (26) is connected to at least one essentially rigid region (28) on which electronic components (36) are arranged.

3. Tyre module (12) according to Claim 1 or 2,
**characterized in that**
the spring constants of the elastic damping means (24) are larger than the spring constant of the elastic bending region (26).

4. Tyre module (12) according to one of Claims 1 to 3,
**characterized in that**
said tyre module (12) is arranged in the tyre (1) in such a way that the force which is transmitted to the elastic bending region (26) of the tyre module (12) by the deformation of the tyre (1) when it runs through the tyre contact area is provided for the conversion of energy.

5. Tyre module (12) according to one of Claims 1 to 4,
**characterized in that**
the deflection-limiting means (30) is arranged in the region of the elastic bending region (26).

6. Tyre module (12) according to one of Claims 1 to 5,
**characterized in that**
the elastic bending region (26) is embodied as a carrier layer which is embodied, in particular, as a leaf spring and on which piezoelectric material (34) is applied in each case in a number of layers on one side or two sides.

7. Tyre module (12) according to one of Claims 1 to 6,
**characterized in that**
the piezoelectric material (34) is embodied as a piezoelectric ceramic (15), in particular lead zirconate titanate (PZT), or as a piezoelectric film, in particular made of polyvinylidene fluoride (PVDF).

8. Tyre module (12) according to one of Claims 1 to 7,
**characterized in that**
the elastic bending region (26) forms, with at least one of the assigned rigid regions (28), a face which is attached in the region of its ends to at least two points in the housing.

9. Tyre module (12) according to one of Claims 1 to 8,
**characterized in that**
the tyre module (12) comprises, in addition to the piezoelectric transducer (32), a second means for supplying energy, in particular in the form of a battery and/or by means of transponder technology using an electromagnetic field.

10. Tyre module (12) according to one of Claims 1 to 9,
**characterized in that**
said tyre module (12) is equipped with a means for radio detection (RFID).

11. Tyre module (12) according to one of Claims 1 to 10,
**characterized in that**
said tyre module (12) comprises a data memory.

12. Tyre module (12) according to Claim 11,
**characterized in that**
the data memory comprises a transceiver unit for wireless data transmission.

13. Tyre module (12) according to one of Claims 1 to 12,
**characterized in that**
said tyre module (12) determines a characteristic variable which is a measure of the tyre contact area of the tyre (1) which is assigned to the tyre module (12).

14. Tyre monitoring system having a tyre module (12) according to one of Claims 1 to 13,
**characterized by** a central unit and a number of tyre modules (12) which are connected to a central evaluation unit via control lines or by means of wireless transmission technology.

15. Tyre monitoring system according to Claim 14,
**characterized in that**
the central evaluation unit is configured for using the specific transmitted characteristic variable for at least one of the following methods:
- determining the positions of the individual wheels, in particular during cornering, braking or acceleration,
- cargo-dependent, tyre pressure warning, roll compensation, in particular by means of an electronic stability program (ESP),
- detection of the wheel load and use of this information in other vehicle control systems, in particular in the beam width adjustment system, and
- wheel lift-off and rollover early detection system.

## Revendications

1. Module de pneu (12) avec un transducteur piézoélectrique (32) à poser sur une face intérieure d'un pneu (1), en particulier d'un pneu de véhicule,
dans lequel le transducteur piézoélectrique (32) comprend un nombre de zones flexibles élastiques (26) formées de matériau piézoélectrique (34) et
un moyen de limitation de la déviation (30), qui protège la zone flexible élastique (26) contre une courbure excessive, dans lequel la fixation de la zone flexible élastique (26) et d'un nombre de zones rigides associées (28) sur l'intérieur du pneu (1) est prévue avec des moyens de fixation appropriés (22) via une multiplicité de moyens d'amortissement élastiques (24), dans lequel le moyen de limitation de la déviation (30) est réalisé sous la forme d'un boîtier composé d'un nombre de parties de boîtier (30, 31), dans lequel le boîtier est réalisé en deux parties et entoure la zone flexible élastique (26) ainsi qu'un nombre de zones rigides (28), dans lequel chacune des deux parties de boîtier (30, 31) est reliée dans une région d'extrémité à un moyen d'amortissement élastique (24), dans lequel la déviation de la zone flexible élastique (26) est limitée par une butée de boîtier (30) entre les parties de boîtier (30, 31) .

2. Module de pneu (12) selon la revendication 1, **caractérisé en ce que** la zone flexible élastique (26) est reliée à au moins une zone essentiellement rigide (28), sur laquelle des composants électroniques (36) sont disposés.

3. Module de pneu (12) selon la revendication 1 ou 2, **caractérisé en ce que** les constantes élastiques des moyens d'amortissement élastiques (24) sont plus élevées que la constante élastique de la zone flexible élastique (26).

4. Module de pneu (12) selon l'une quelconque des revendications 1 à 3, **caractérisé en ce qu'**il est disposé dans le pneu (1) d'une manière telle que la force transmise par la déformation du pneu (1) lors du passage d'aplatissement sur la région flexible élastique (26) du module de pneu (12) soit prévue pour la conversion d'énergie.

5. Module de pneu (12) selon l'une quelconque des revendications 1 à 4, **caractérisé en ce que** le moyen de limitation de la déviation (30) est disposé dans la région de la zone flexible élastique (26).

6. Module de pneu (12) selon l'une quelconque des revendications 1 à 5, **caractérisé en ce que** la zone flexible élastique (26) est réalisée sous forme de couche de support, réalisée en particulier en forme de ressort à lame, sur laquelle un matériau piézoélectrique (34) est déposé sur une face ou sur deux faces chaque fois en un nombre de couches.

7. Module de pneu (12) selon l'une quelconque des revendications 1 à 6, **caractérisé en ce que** le matériau piézoélectrique (34) est constitué par une céramique piézoélectrique (15), en particulier du zirconate titanate de plomb (PZT), ou par un film piézoélectrique, en particulier en fluorure de polyvinylidène (PVDF).

8. Module de pneu (12) selon l'une quelconque des revendications 1 à 7, **caractérisé en ce que** la zone flexible élastique (26) forme avec au moins une des zones rigides associées (28) une face, qui est fixée dans le boîtier en au moins deux endroits dans la région de ses extrémités.

9. Module de pneu (12) selon l'une quelconque des revendications 1 à 8, **caractérisé en ce que** le module de pneu (12) comprend, en plus du transducteur piézoélectrique (32), un deuxième moyen de fourniture d'énergie, en particulier sous la forme d'une batterie et/ou par la technologie des transpondeurs via un champ électromagnétique.

10. Module de pneu (12) selon l'une quelconque des revendications 1 à 9, **caractérisé en ce qu'**il est équipé d'un moyen de reconnaissance radio (RFID).

11. Module de pneu (12) selon l'une quelconque des revendications 1 à 10, **caractérisé en ce qu'**il comprend une mémoire de données.

12. Module de pneu (12) selon la revendication 11, **caractérisé en ce que** la mémoire de données comprend une unité d'émission et de réception pour la transmission de données sans fil.

13. Module de pneu (12) selon l'une quelconque des revendications 1 à 12, **caractérisé en ce qu'**il détermine une grandeur caractéristique, qui est une mesure de la longueur de l'aplatissement du pneu (1) associé au module de pneu (12).

14. Système de surveillance de pneu avec un module de pneu (12) selon l'une quelconque des revendications 1 à 13, **caractérisé par** une unité centrale et un nombre de modules de pneu (12), qui sont en liaison avec une unité d'exploitation centrale par des lignes de commande ou au moyen d'une technique de transmission sans fil.

15. Système de surveillance de pneu selon la revendication 14, **caractérisé en ce que** l'unité d'exploitation centrale pour l'utilisation de la grandeur caractéristique déterminée transmise est conçue pour au moins un des procédés suivants:
- détermination des positions des roues individuelles, en particulier lors d'un passage en courbe, d'un freinage ou d'une accélération,
- avertissement relatif à la pression des pneus en fonction du chargement, équilibrage du roulis, en particulier par un programme de stabilité électronique (ESP),
- identification de la charge de roue et utilisation de cette information dans d'autres systèmes de commande du véhicule, en particulier dans le système de régulation de la portée des phares,
- identification précoce d'un soulèvement de roue et d'un capotage.
